# FASCICULE DE BREVET EUROPEEN

(11) **EP 3 523 099 B1**
(45) Date de publication et mention de la délivrance du brevet: **21.10.2020**
(21) Numéro de dépôt: 17786981.5
(22) Date de dépôt: 05.10.2017
(51) Int. Cl.: B25J 9/00

(54) **POIGNET ROBOTIQUE PARALLÈLE À QUATRE DEGRÉS DE LIBERTÉ**
PARALLELES ROBOTERHANDGELENK MIT VIER FREIHEITSGRADEN
PARALLEL ROBOTIC WRIST WITH FOUR DEGREES OF FREEDOM

(30) Priorité: 06.10.2016 FR 1659660
(43) Date de publication de la demande: 14.08.2019
(73) Titulaire: École Nationale Supérieure de Mécanique et des Microtechniques, 25030 Besançon Cedex (FR); Université de Franche-Comté, 25030 Besançon (FR)
(72) Inventeur: LAURENT, Guillaume, 25000 Besançon (FR); DAHMOUCHE, Redwan, 25000 Besançon (FR); HAOUAS, Wissem, 25000 Besançon (FR); PIAT, Nadine, 25660 Fontain (FR)
(74) Mandataire: Plasseraud IP
(86) Numéro de dépôt international: PCT/FR2017/052735
(87) Numéro de publication internationale: WO 2018/065734

(56) Documents cités:
- US-A1- 2004 253 079
- US-A1- 2008 196 533
- US-A1- 2014 379 014

## Description

L'invention concerne une structure robotique permettant de déplacer un outil de type pince ou cisaille autour d'un point selon trois degrés de liberté en rotation et d'actionner cet outil selon un degré de liberté en rotation, les moteurs d'entraînement étant fixes et disposés à la base de la structure. L'invention peut notamment mais pas exclusivement être mis en œuvre dans le domaine médical pour réaliser des opérations de chirurgie mini-invasive.

La plupart des dispositifs que l'on connaît, tels que par exemple les principaux robots industriels connus, comporte un élément porteur supportant un poignet lui-même portant un outil de préhension, l'élément porteur comportant trois axes dits principaux destinés à définir trois degrés de liberté qui peuvent être des rotations et/ou des translations, de façon à positionner le poignet dans l'espace, l'orientation dudit poignet étant à son tour commandée par un à trois axes dits secondaires, selon un à trois degrés de liberté supplémentaires qui sont nécessairement des rotations, l'outil pouvant comporter un axe supplémentaire permettant le serrage d'une pince.

Dans ces dispositifs, la commande des degrés de liberté du poignet et de l'outil de préhension se fait en série. Le poignet, dont la configuration peut être sphérique (axes concourants) ou non, est utilisé pour définir l'orientation de l'outil.

Cette configuration en série nécessite la localisation des moteurs d'entraînement au niveau de chaque axe ou demande une configuration lourde et encombrante pour la transmission du mouvement aux axes du poignet, et, par conséquent, même dans le cas de préhension d'une petite charge, des masses importantes doivent être mises en mouvement.

On connaît d'autre part un dispositif de configuration semblable à celle d'un simulateur de vol, comportant six axes travaillant en parallèle. Dans ce cas, les moteurs peuvent être fixes, ce qui limite les masses à mettre en mouvement. Cependant, ce genre de dispositif ne permet pas d'actionner d'un outil de préhension à l'aide des moteurs disposés sur sa base fixe.

Un dispositif dans lequel la commande des trois degrés de liberté de base s'effectue en parallèle est décrit dans le brevet US2286571. Ce dispositif est destiné au positionnement et à la commande du mouvement d'un pistolet à peinture. Il comprend trois actionneurs solidaires d'un élément de base, chacun des actionneurs comportant une partie fixe et un bras mobile monté en rotation à l'une de ses extrémités sur la partie fixe de l'actionneur. Sur la seconde extrémité de chacun des bras sont montés respectivement trois barres de liaison par l'intermédiaire d'articulations du type cardan montées respectivement à l'une des extrémités des barres de liaison. Deux des barres de liaison sont montées en articulation à leur seconde extrémité sur la troisième barre de liaison, près de sa seconde extrémité. Le support de pistolet est monté en articulation à l'extrémité de la troisième barre de liaison. Ce genre de dispositif ne permet pas d'actionner directement un outil de préhension à l'aide des actionneurs disposés sur sa base fixe.

Le brevet WO1987003528A1 (autre référence : US4976582) décrit un autre dispositif dans lequel la commande des trois degrés de liberté de base s'effectue en parallèle. Ce dispositif comporte un élément de base, un élément mobile et trois actionneurs comportant chacun une partie fixe et une partie mobile, la partie fixe de chaque actionneur étant solidaire de l'élément de base, la partie mobile de chacun d'eux étant rendue solidaire de l'élément mobile par l'intermédiaire d'un élément de liaison, chacun des éléments de liaison étant monté en articulation de type cardan d'une part sur la partie mobile de l'actionneur et monté en articulation d'autre part sur l'élément mobile, l'ensemble étant agencé de façon que l'inclinaison et l'orientation dans l'espace de l'élément mobile restent inchangées, quels que soient les mouvements des parties mobiles des actionneurs. Ce dispositif est adapté pour le transfert de pièces légères à des cadences très élevées mais ne permet pas ni l'orientation de l'outil de préhension ni son actionnement à l'aide des actionneurs disposés sur sa base fixe.

On connaît également un dispositif (brevet US6516681) similaire au précédent comportant quatre éléments actionneurs et liaisons parallèles permettant en plus la rotation de l'élément mobile selon un axe vertical mais ne permet pas ni la rotation de l'outil selon les deux autres degrés de liberté en rotation ni son actionnement à l'aide des actionneurs disposés sur sa base fixe.

Enfin, le document US-A-2004 0253079, qui représente l'art antérieur le plus proche, présente un dispositif comprenant un élément de base, deux éléments mobiles montés en rotation l'un avec l'autre, trois actionneurs comportant chacun une partie fixe solidaire de la base et une partie mobile rendue chacune solidaire d'un élément de liaison par l'intermédiaire d'une articulation rotule, l'un des éléments de liaison étant monté en articulation rotule sur le premier élément mobile, les deux autres sur le deuxième, le premier élément mobile étant monté en articulation rotule sur l'élément de base. Dans ce dispositif connu, la rotation du premier élément mobile selon deux degrés de liberté ainsi que la rotation entre les éléments mobiles sont commandés via les éléments de liaison par le déplacement des parties mobiles des actionneurs.

L'objet de la présente invention est d'améliorer la dynamique du dispositif en réduisant les masses en mouvement.

À cet effet, la présente invention propose un dispositif selon la revendication 1.

Le dispositif revendiqué comporte au moins quatre actionneurs.

L'agencement d'un quatrième actionneur permet d'effectuer une rotation des deux éléments mobiles autour de l'axe longitudinal, à la différence du dispositif connu qui suggère une rotation de l'ensemble du dispositif autour de son axe.

La présente invention est un poignet robotique parallèle qui permet de réaliser le déplacement d'éléments de travail autour d'un point selon trois degrés de liberté en rotation et d'actionner une fonction de préhension ou de coupe, les actionneurs étant disposés sur la partie fixe de la structure. La fonctionnalité de préhension est assurée par la rotation de deux éléments mobiles autour d'une liaison pivot qui fait partie de l'architecture mécanique elle-même et peut être entièrement contrôlée par des moteurs d'entraînement situés loin de l'outil. De ce fait, cette structure peut être exploitée dans des nombreuses applications nécessitant la préhension d'objet (pince) ou le découpage (cisaille) et où l'encombrement des moteurs est un problème. Aucun des dispositifs connus ne présente de telles caractéristiques.

Pour ce faire, le dispositif robotisé comprend :
- un élément base,
- un premier élément mobile et un deuxième élément mobile sur lesquels des éléments de travail sont disposés, les éléments de travail étant ainsi déplaçables dans une pluralité de positions entre une position ouverte dans laquelle ils sont écartés l'un de l'autre, et une position fermée dans laquelle ils sont rapprochés l'un de l'autre,
- une structure de liaison reliant les éléments mobiles à la base de telle manière que les éléments mobiles puissent être déplacés par rapport à la base.

Selon l'invention, les deux éléments mobiles sont déplaçables l'un par rapport à l'autre et la structure de liaison est adaptée pour :
- déplacer le premier élément mobile en rotation autour d'un centre de rotation dans une pluralité d'orientations par rapport à l'élément de base ;
- déplacer les éléments mobiles l'un par rapport à l'autre de telle manière qu'à chaque orientation du premier élément mobile corresponde une pluralité d'orientations du deuxième élément mobile.

La structure de liaison comprend au moins quatre mécanismes de liaison reliant les éléments mobiles à l'élément de base. Chaque mécanisme de liaison comprend :
- un actionneur comportant une partie fixe et une partie mobile,
- un élément de liaison présentant deux extrémités opposées reliées respectivement à la partie mobile et à un des éléments mobiles par deux articulations présentant chacune au moins deux degrés de liberté en rotation selon deux axes perpendiculaires, l'une des deux articulations présentant au moins trois degrés de liberté en rotation.

Chaque articulation peut être choisie parmi une rotule, un joint de cadran et un matériau élastiquement déformable.

Chaque partie mobile peut être déplaçable en translation par rapport à la partie fixe du dispositif d'entraînement ou en rotation autour d'un axe par rapport à la partie fixe du dispositif d'entraînement.

Dans le mode de réalisation mis en œuvre, les éléments mobiles sont articulés l'une à l'autre en rotation autour d'un axe de pivotement.

La structure de liaison comprend au moins quatre mécanismes de liaison, chaque élément mobile étant relié à au moins un dispositif de liaison.

Le dispositif robotisé comprend également un élément de base s'étendant selon l'axe de base jusqu'à une extrémité libre portant le centre de rotation et sur laquelle le premier élément mobile est monté.

Le dispositif robotisé comprend en outre un ordinateur de gestion contrôlant les actionneurs.

Les avantages du dispositif objet de l'invention sont multiples. Un des avantages est que les volumes et les masses en mouvement sont réduits au minimum. Cette configuration permet la préhension d'objets dont la masse totale est du même ordre que l'inertie déplacée du dispositif. Les cadences peuvent être très élevées.

L'invention permet en outre la rotation d'un outil de préhension selon trois degrés de liberté autour d'un point et son actionnement sans recourir à l'ajout d'un moteur sur les éléments mobiles comme cela est nécessaire sur les poignets de robot connus. L'invention permet également d'orienter et d'actionner directement un outil de découpe comme une cisaille. L'invention offre une dextérité et une précision de mouvement similaire aux poignets connus tout en présentant un encombrement réduit.

De plus, les quatre actionneurs étant fixés à l'élément de base, ils peuvent être disposés loin des éléments mobiles, permettant d'introduire, d'orienter et d'actionner un outil dans un espace confiné.

Enfin, la rigidité de la structure parallèle permet la transmission de forces plus importantes qu'une structure série ayant des dimensions similaires.

Le dispositif objet de l'invention est avantageusement utilisé pour la réalisation d'un outil robotisé de chirurgie mini-invasive. Dans ces conditions, les actionneurs sont situés en dehors du corps du patient et les éléments mobiles des actionneurs sont très allongés pour transmettre le mouvement à l'outil chirurgical situé à l'intérieur du corps du patient. L'outil chirurgical est constitué des deux éléments mobiles équipés d'éléments de travail adaptés. L'invention apporte un gain d'espace par rapport à des solutions connues tout en garantissant une grande dextérité de travail au chirurgien.

Selon une autre utilisation avantageuse, le dispositif objet de l'invention est utilisé pour la réalisation d'une cisaille actionnée par quatre vérins hydrauliques afin de découper des objets dans des espaces inatteignables par des systèmes connus, comme par exemple à l'intérieur d'une canalisation. La grande rigidité de la structure parallèle est dans ce cas un avantage pour envisager la découpe d'objets nécessitant des forces importantes tout en garantissant une grande dextérité de travail.

Avantageusement, le dispositif objet de l'invention peut être utilisé de façon à permettre la mesure d'un déplacement dans l'espace et d'un angle de serrage entre les deux éléments mobiles. Dans ces conditions, les actionneurs sont remplacés par des capteurs de position, permettant de la mesure indirecte de l'orientation des éléments mobiles à la manière d'une manette type «joystick» et qui en plus des trois rotations de l'espace permet de mesurer l'angle formé par les deux éléments mobiles que l'utilisateur tient dans sa main.

Selon une autre utilisation avantageuse, le dispositif objet de l'invention peut être utilisé avantageusement de façon à réaliser une interface haptique à retour de force selon quatre degrés de liberté. Dans ces conditions, le dispositif est utilisé pour reconstituer, à l'aide des actionneurs qui impriment des mouvements en sens contraires, certaines sensations physiques liées à l'action se déroulant sur un écran ou visant à recréer voire amplifier les effets de résistance liés, par exemple, à la conduite d'une pince hydraulique ou d'une opération chirurgicale.

Finalement, et sans que cette liste ne soit exhaustive, le dispositif objet de l'invention peut être utilisé dans des domaines d'application très variés. On citera par exemple :
- la manipulation et la découpe d'éléments de toutes sortes et de toutes natures,
- tout domaine nécessitant d'orienter et d'actionner une pince ou une cisaille dans l'espace par exemple en robotique manufacturière, en chirurgie, pour le tri et le recyclage, dans le bâtiment et les travaux publics, en agriculture, etc.
- la manipulation et la découpe d'éléments dans des milieux confinés ou difficilement accessibles comme par exemple en chirurgie mini-invasive, pour les travaux dans les canalisations, etc.
- la détermination d'un déplacement dans l'espace destinée par exemple à une mesure dimensionnelle de pièces, ou à l'enregistrement d'un mouvement à l'image d'un joystick, etc.
- la détermination de forces dans l'espace et de couples destinée par exemple à la commande en force d'un robot ou à la réalisation d'une interface haptique, etc.

On comprendra mieux l'invention à l'aide de la description qui suit, donnée à titre d'exemple, et qui se réfère aux figures 1 à 6 dans lesquelles :
- la figure 1 représente de manière schématique selon une vue en perspective un exemple de réalisation du dispositif objet de l'invention dans lequel la partie mobile de chaque actionneur est montée en translation ;
- la figure 2 montre de manière symbolique une configuration du dispositif objet de l'invention dans laquelle la partie mobile de chaque actionneur est montée en translation;
- la figure 3 représente de manière schématique selon une vue en perspective un exemple de réalisation du dispositif objet de l'invention dans lequel la partie mobile de chaque actionneur est montée en rotation ;
- la figure 4 montre de manière symbolique une configuration du dispositif objet de l'invention dans laquelle la partie mobile de chaque actionneur est montée en rotation ;
- la figure 5 représente de manière schématique selon des vues en perspective un exemple d'exécution du dispositif objet de l'invention dans lequel les parties mobiles des actionneurs sont très longues dans le but d'éloigner les actionneurs des éléments de travail et de permettre l'introduction des éléments de travail dans un espace confiné ; la figure 5 illustre également quelques mouvements possibles de l'exemple de réalisation du dispositif objet de l'invention ;
- la figure 6 représente un graphique montrant les positions des extrémités des éléments de travail atteignables par une exécution de l'invention donnée à titre d'exemple.

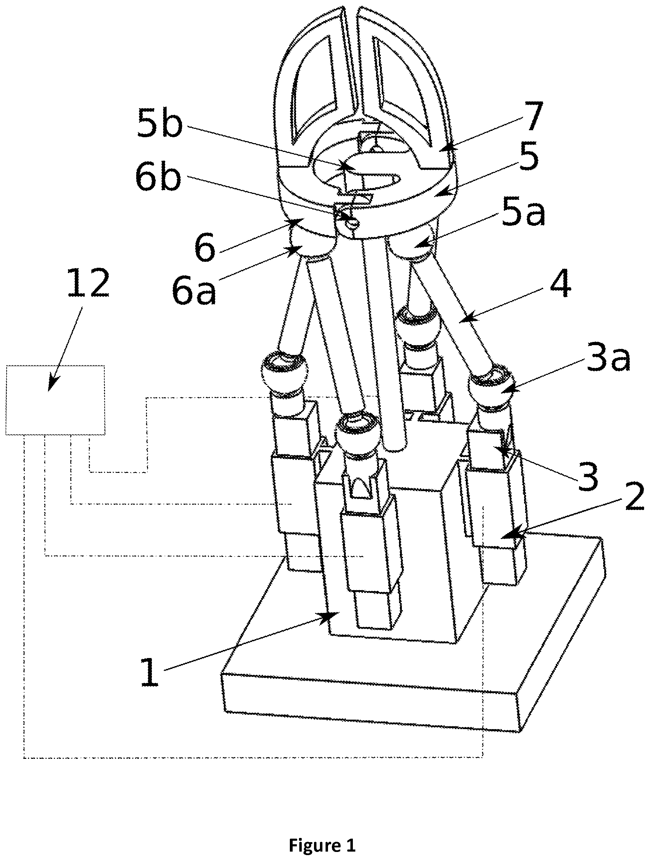

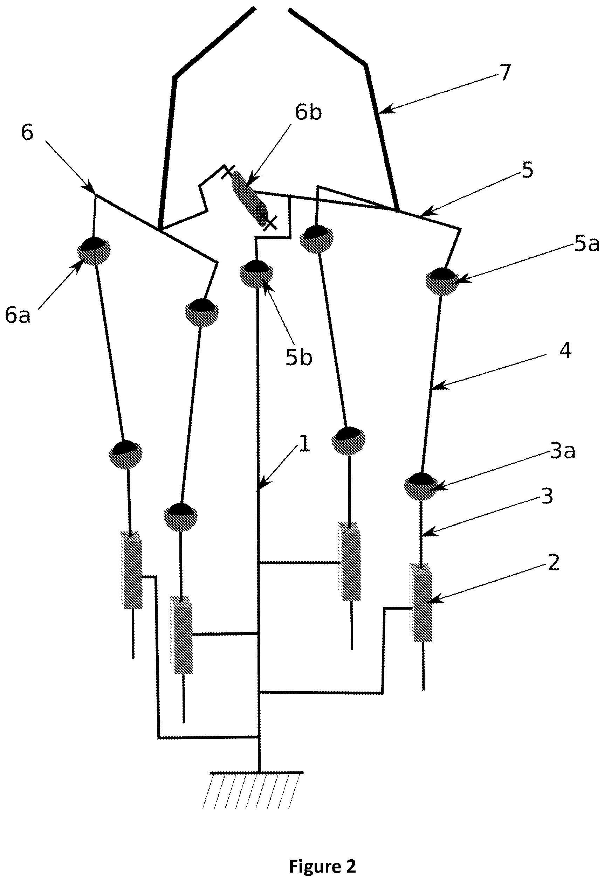

En se référant aux figures 1 et 2, le dispositif comporte un élément de base (1), un premier élément mobile (5) et un deuxième élément mobile (6). L'élément de base (1) comporte quatre actionneurs à guidage rectiligne (23) comportant chacun une partie fixe (2) solidaire de l'élément de base (1) et une partie mobile (3). Un élément de liaison (4) est monté sur chaque partie mobile (3) par l'intermédiaire d'une articulation rotule (3a). Les éléments de liaison (4) sont reliés à l'un des éléments mobiles (5) et (6) par l'intermédiaire d'une articulation rotule (5a) ou (6a). Au moins un élément de liaison (4) est relié par l'intermédiaire d'une articulation rotule (5a) au premier élément mobile (5). Au moins un élément de liaison (4) est relié par l'intermédiaire d'une articulation rotule (6a) au deuxième élément mobile (6). Le premier élément mobile (5) est relié à l'élément de base (1) par l'intermédiaire d'une articulation rotule (5b) et au deuxième élément mobile (6) par une liaison pivot (6b). Les articulations (3a), (5a) et (6a) sont agencées de façon à ce que la rotation du premier élément mobile (5) selon trois degrés de liberté ainsi que la rotation entre les éléments mobiles (5) et (6) puissent être commandées par la translation des parties mobiles (3) des actionneurs via les éléments de liaison (4).

Dans la configuration représentée aux figures 1 et 2, les éléments mobiles (5) et (6) étant liés par une liaison pivot, ils permettent d'actionner des éléments de travail (7) tels que par exemple les doigts d'un système de préhension, les deux parties mobiles d'une cisaille, des ventouses ou tout autre outil pouvant être disposé sur les éléments mobiles (5) et (6).

Les quatre actionneurs (23) sont connectés par l'intermédiaire d'amplificateurs adéquats à un ordinateur (12) de gestion destiné à contrôler les mouvements des parties mobiles (3) des actionneurs.

Dans une variante d'exécution du robot non représenté, au moins une des articulations (3a), (5a), (6a) et (5b) est remplacée par un joint de cardan.

Dans une variante d'exécution du robot non représenté, au moins une des articulations (3a), (5a), (6a), (5b) et (6b) est remplacée par une liaison flexible permettant des rotations grâce à la déformation élastique d'un élément.

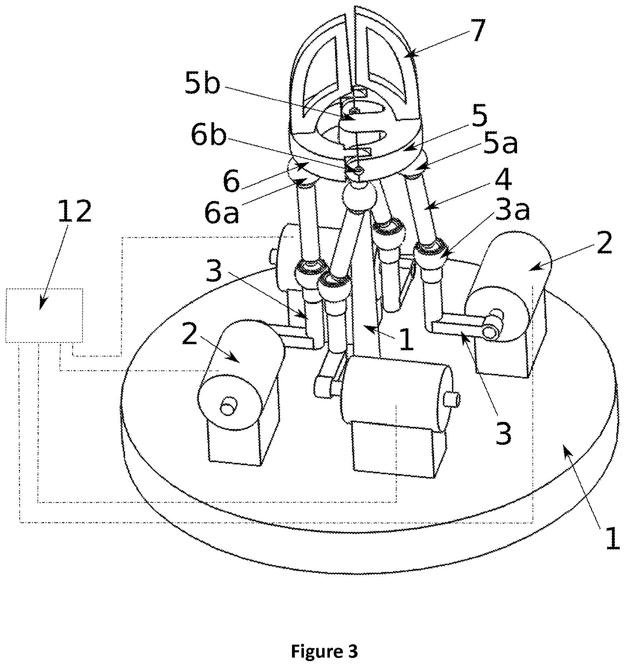

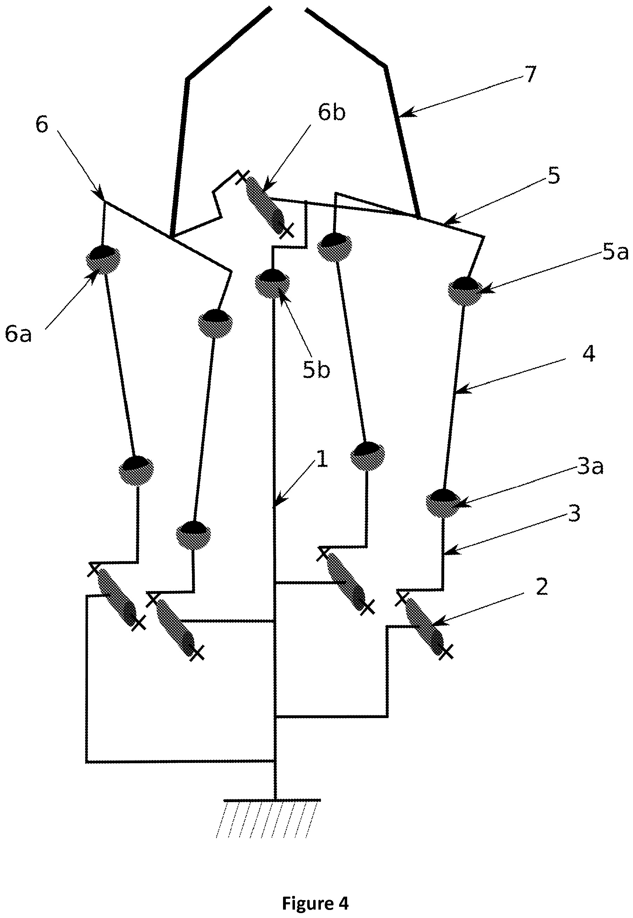

Selon une autre forme d'exécution du dispositif, représentée aux figures 3 et 4, les éléments (3) qui, dans l'exemple représenté aux figures 1 et 2, constituent des parties mobiles montées en translation autour des axes (2) sont remplacés par des parties mobiles montés en rotation.

Dans la configuration du dispositif objet de l'invention représentée dans les différentes figures, les articulations (3a) sont disposées en carré. Les articulations (5a) sont également disposées en carré et l'articulation (5b) est dans l'axe du pivot (6b). Bien entendu, cette disposition n'est nullement exhaustive. D'autre part, bien que le dispositif ait été représenté avec un élément de base (1) et des éléments mobiles (5), (6) et (7) de forme définie, ces éléments peuvent avoir des formes diverses et être orientés dans des positions quelconques. Les parties fixes (2) et les parties mobiles (3) des actionneurs ainsi que les éléments de liaison (4) peuvent également avoir des formes et des dimensions diverses.

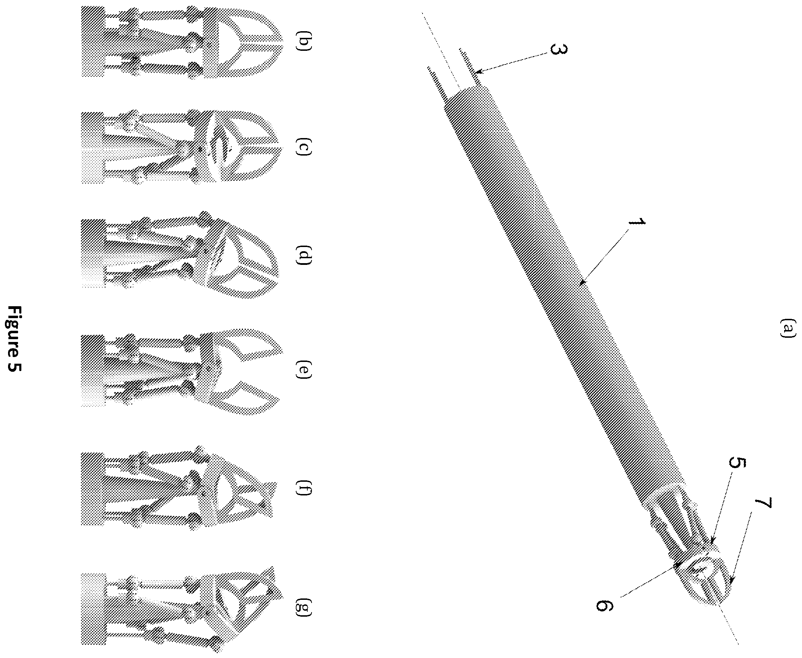

A titre de validation, la figure 5 représente un exemple d'exécution du dispositif objet de l'invention dans diverses positions de travail avec des dimensions fixées. Dans cette réalisation, la longueur des éléments de liaison (4) est 34 mm. Les articulations (5a) et (6a) sont disposées en carré à 16 mm de l'axe de base représenté en pointillé sur la figure 5. Deux de ces articulations sont placées dans le même plan que les articulations (5b) et (6b). De plus, l'articulation (5b) est placée dans l'axe de rotation de l'articulation (6b). Les actionneurs ont une course de 20 mm en translation selon l'axe de base du poignet. Les articulations (3a) sont disposées à 16 mm de l'articulation (5b). Cette disposition est donnée à titre d'exemple et n'est nullement exhaustive.

Cette exécution de l'invention permet une rotation des éléments mobiles de plus ou moins 66° autour de l'axe longitudinal, des angles d'inclinaison de plus ou moins 40° dans une direction perpendiculaire à l'axe longitudinal et de plus ou moins 52° dans l'autre direction perpendiculaire à l'axe longitudinal. La rotation entre les deux éléments mobiles permet d'atteindre un angle d'ouverture de 33° et un angle de fermeture de -30° des éléments de travail.

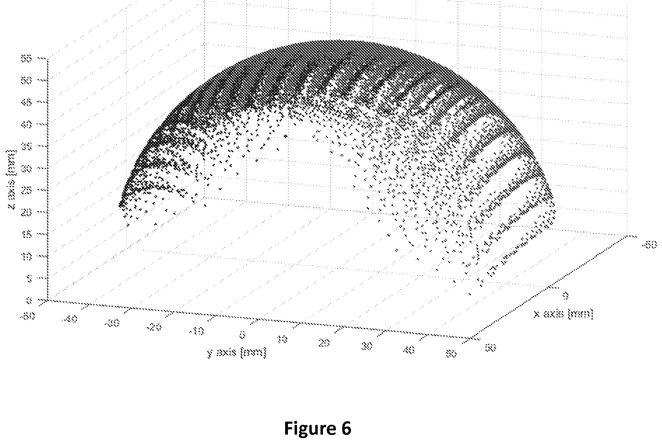

Les positions atteignables par les extrémités des éléments de travail (7) sont représentées par des points bleus et rouges sur le graphique de la figure 6. Les portions de sphères couvertes montrent la pluralité des positions que les éléments de travail peuvent atteindre par le mouvement des actionneurs (23) et dans cette exécution particulière.

## Revendications

1. Dispositif permettant le déplacement d'un premier élément mobile (5) autour d'un point selon trois degrés de liberté en rotation et la rotation d'un deuxième élément mobile (6) par rapport au premier élément mobile (5) selon un degré de liberté, comportant au moins un élément de base (1), au moins deux éléments (5,6), au moins quatre actionneurs (23) comportant chacun une partie fixe (2) et une partie mobile (3), la partie fixe de chaque actionneur étant solidaire de l'élément de base (1), la partie mobile de chacun d'eux étant rendue solidaire d'un élément de liaison (4) par l'intermédiaire d'une articulation (3a), les éléments de liaison (4) étant montés en articulation (5a,6a) sur l'un des éléments mobiles (5,6), au moins un des éléments de liaison (4) étant monté en articulation (5a) sur le premier élément mobile (5), au moins un des éléments de liaison (4) étant monté en articulation (6a) sur le deuxième élément mobile (6), le premier élément mobile (5) étant monté en articulation (5b) sur l'élément de base (1), les éléments mobiles (5,6), étant montés en rotation (6b) l'un avec l'autre, les articulations (3a,5a,6a) étant agencées de façon à ce que la rotation du premier élément mobile (5) selon trois degrés de liberté ainsi que la rotation entre les éléments mobiles (5,6) puissent être commandées via les éléments de liaison (4) par le déplacement des parties mobiles (3) des actionneurs, les actionneurs étant pilotés par un ordinateur de gestion (12).

2. Dispositif selon la revendication 1, **caractérisé en ce qu'**au moins une des articulations (3a, 5a, 6a et 5b) est une articulation rotule.

3. Dispositif selon la revendication 2, **caractérisé en ce qu'**au moins une des articulations (3a, 5a, 6a et 5b) est un joint de cardan.

4. Dispositif selon l'une des revendications 2 à 3, **caractérisé en ce qu'**au moins une des articulations (3a, 5a, 6a, 5b et 6b) est une articulation flexible réalisée par la déformation élastique d'un élément.

5. Dispositif selon l'une des revendications 1 à 4, **caractérisé en ce que** la partie mobile (3) de chaque actionneur (23) est montée en translation par rapport à la partie fixe (3) dudit actionneur, et **en ce que** ladite partie mobile est agencée de façon à empêcher sa rotation autour de l'axe du mouvement de translation.

6. Dispositif selon l'une des revendications 1 à 4, **caractérisé en ce que** la partie mobile (3) de chaque actionneur (23) est montée en rotation par rapport à la partie fixe (2) dudit actionneur, et **en ce que** ladite partie mobile est agencée de façon à empêcher sa translation selon l'axe du mouvement de rotation.

7. Dispositif selon l'une des revendications précédentes, **caractérisé en ce qu'**il comporte des éléments de travail solidaires des éléments mobiles (5) et (6).

8. Dispositif selon l'une des revendications précédentes, **caractérisé en ce qu'**il comporte un dispositif de travail solidaire des éléments mobiles (5) et (6) pouvant être actionné par la rotation entre les éléments mobiles (5) et (6).

9. Dispositif selon l'une des revendications précédentes, **caractérisé en ce qu'**il est agencé de façon à permettre la mesure d'un déplacement dans l'espace à la manière d'une manette type « joystick ».

10. Dispositif selon l'une des revendications précédentes, **caractérisé en ce qu'**il est agencé de façon à être utilisé comme un dispositif haptique à retour de force.

## Patentansprüche

1. Vorrichtung, die die Verschiebung eines ersten beweglichen Elementes (5) um einen Punkt in drei Drehfreiheitsgraden und die Drehung eines zweiten beweglichen Elementes (6) relativ zum ersten beweglichen Element (5) in einem Freiheitsgrad ermöglicht, umfassend mindestens ein Basiselement (1), mindestens zwei bewegliche Elemente (5, 6), mindestens vier Aktuatoren (23), von denen jeder einen festen Teil (2) und einen beweglichen Teil (3) aufweist, wobei der feste Teil jedes Aktuators mit dem Basiselement (1) fest verbunden ist, der bewegliche Teil jedes Aktuators mittels eines Gelenks (3a) mit einem Verbindungselement (4) fest verbunden ist und die Verbindungselemente (4) gelenkig (5a, 6a) an einem der beweglichen Elemente (5, 6) angebracht sind, wobei mindestens eines der Verbindungselemente (4) gelenkig (5a) an dem ersten beweglichen Element (5) gelagert ist, wobei mindestens eines der Verbindungselemente (4) gelenkig (6a) an dem zweiten beweglichen Element (6) gelagert ist, wobei das erste bewegliche Element (5) gelenkig (5b) an dem Basiselement (1) gelagert ist, wobei die beweglichen Elemente (5, 6) miteinander drehbar (6b) gelagert sind, und **dadurch gekennzeichnet, dass** die Gelenke (3a, 5a, 6a) so angeordnet sind, dass die Drehung des ersten beweglichen Elements (5) in drei Freiheitsgraden und die Drehung zwischen den beweglichen Elementen (5, 6) über die Verbindungselemente (4) durch die Bewegung der beweglichen Teile (3) der Aktuatoren gesteuert werden kann, wobei die Aktuatoren von einem Verwaltungscomputer (12) gesteuert werden.

2. Vorrichtung nach Anspruch 1, **dadurch gekennzeichnet, dass** die Gelenke (3a, 5a, 6a und 5b) Kugelgelenke sind.

3. Vorrichtung nach Anspruch 2, **dadurch gekennzeichnet, dass** mindestens eines der Gelenke (3a, 5a, 6a und 5b) ein Kardangelenk ist.

4. Vorrichtung nach einem der Ansprüche 2 bis 3, **dadurch gekennzeichnet, dass** mindestens eines der Gelenke (3a, 5a, 6a, 5b und 6b) ein elastisches Gelenk ist, das durch elastische Verformung eines Elements hergestellt wird.

5. Vorrichtung nach einem der Ansprüche 1 bis 4, **dadurch gekennzeichnet, dass** der bewegliche Teil (3) jedes Stellgliedes (23) in Bezug auf den feststehenden Teil (3) des genannten Stellgliedes translatorisch montiert ist, und dass der genannte bewegliche Teil so angeordnet ist, dass seine Drehung um die Achse der Translationsbewegung verhindert wird.

6. Vorrichtung nach einem der Ansprüche 1 bis 4, **dadurch gekennzeichnet, dass** der bewegliche Teil (3) jedes Stellgliedes (23) in Bezug auf den feststehenden Teil (2) des Stellgliedes drehbar gelagert ist und dass der bewegliche Teil so angeordnet ist, dass seine Verschiebung um die Achse der Drehbewegung verhindert wird.

7. Vorrichtung nach einem der vorstehenden Ansprüche, **dadurch gekennzeichnet, dass** sie Arbeitselemente umfasst, die mit den beweglichen Elementen (5) und (6) fest verbunden sind.

8. Vorrichtung nach einem der vorstehenden Ansprüche, **dadurch gekennzeichnet, dass** sie eine Arbeitsvorrichtung umfasst, die mit den beweglichen Elementen (5) und (6) fest verbunden ist und durch Drehung zwischen den beweglichen Elementen (5) und (6) betätigt werden kann.

9. Vorrichtung nach einem der vorstehenden Ansprüche, **dadurch gekennzeichnet, dass** sie so angeordnet ist, dass sie die Messung einer Raumverschiebung in der Art eines Joystick-Hebels ermöglicht.

10. Vorrichtung nach einem der vorstehenden Ansprüche, **dadurch gekennzeichnet, dass** sie so angeordnet ist, dass sie als haptische Kraftrückkopplungsvorrichtung verwendet werden kann.

## Claims

1. A device allowing the displacement of a first movable element (5) around a point according to three degrees of freedom in rotation and the rotation of a second movable element (6) relative to the first movable element (5) according to one degree of freedom, including at least one base element (1), at least two elements (5, 6), at least four actuators (23) each including a fixed part (2) and a movable part (3), the fixed part of each actuator being integral with the base element (1), the movable part of each of them being made integral with a connecting element (4) by means of a hinge (3a), the connecting elements (4) being mounted in a hinged manner (5a, 6a) on one of the movable elements (5, 6), at least one of the connecting elements (4) being mounted in a hinged manner (5a) on the first movable element (5), at least one of the connecting elements (4) being mounted in a hinged manner (6a) on the second movable element (6), the first movable element (5) being mounted in a hinged manner (5b) on the base element (1), the movable elements (5, 6) being mounted in rotation (6b) with each other, the hinges (3a, 5a, 6a) being arranged so that the rotation of the first movable element (5) according to three degrees of freedom as well as the rotation between the movable elements (5, 6) can be controlled via the connecting elements (4) by the displacement of the movable parts (3) of the actuators, the actuators being piloted by a management computer (12).

2. The device according to claim 1, **characterised in that** at least one of the hinges (3a, 5a, 6a and 5b) is a ball joint.

3. The device according to claim 2, **characterised in that** at least one of the hinges (3a, 5a, 6a and 5b) is a universal joint.

4. The device according to one of claims 2 to 3, **characterised in that** at least one of the hinges (3 a, 5 a, 6a, 5b and 6b) is a flexible hinge produced by the elastic deformation of an element.

5. The device according to one of claims 1 to 4, **characterised in that** the movable part (3) of each actuator (23) is mounted in translation relative to the fixed part (3) of said actuator, and **in that** said movable part is arranged so as to prevent its rotation about the axis of the translational movement.

6. The device according to one of claims 1 to 4, **characterised in that** the movable part (3) of each actuator (23) is mounted in rotation relative to the fixed part (2) of said actuator, and **in that** said movable part is arranged so as to prevent its translation along the axis of the rotational movement.

7. The device according to one of the preceding claims, **characterised in that** it includes working elements integral with the movable elements (5) and (6).

8. The device according to one of the preceding claims, **characterised in that** it includes a working device integral with the movable elements (5) and (6) which can be actuated by the rotation between the movable elements (5) and (6).

9. The device according to one of the preceding claims, **characterised in that** it is arranged so as to allow the measurement of a displacement in space in the manner of a joystick-type lever.

10. The device according to one of the preceding claims, **characterised in that** it is arranged to be used as a force feedback haptic device.
